# EUROPEAN PATENT SPECIFICATION

(11) **EP 1 663 628 B1**
(45) Date of publication and mention of the grant of the patent: **02.04.2008**
(21) Application number: 04765062.7
(22) Date of filing: 10.09.2004
(51) Int. Cl.: B29D 11/00, B29C 35/08

(54) **METHOD FOR MAKING CONTACT LENSES**
VERFAHREN ZUR HERSTELLUNG VON KONTAKTLINSEN
PROCEDE DE PRODUCTION DE VERRES DE CONTACT

(30) Priority: 12.09.2003 US 502561 P
(43) Date of publication of application: 07.06.2006
(73) Proprietor: Novartis AG, 4056 Basel (CH)
(72) Inventor: DEVLIN, Brian, Gerrard, Suwanne, GA 30024 (US); MEDINA, Arturo, Norberto, Duluth, GA 30096 (US); TENA, Mireille, CH-5405 Baden-Daettwil (CH)
(74) Representative: Heinen, Detlef
(86) International application number: PCT/EP2004/010135
(87) International publication number: WO 2005/025843

(56) References cited:
- EP-A- 0 367 513
- EP-A- 0 637 490
- WO-A-00/59713
- WO-A-87/04390

## Description

The present invention is related to a method for making a contact lens. In particular, the present invention is related to a method for production of contact lenses with relatively high edge quality and with relatively high precision and fidelity in reproducing a desired lens design.

### BACKGROUND

Contact lenses can be manufactured economically in large numbers by a conventional full-mold process involving disposable molds, the examples of which are disclosed in, for example, PCT patent application No. WO 87/04390 or in EP-A 0 367 513. In a conventional molding process, a predetermined amount of a polymerizable or crosslinkable material typically is introduced into a disposable mold comprising a female (concave) mold half and a male (convex) mold half. The female and male mold halves cooperate with each other to form a mold cavity having a desired geometry for a contact lens. Normally, a surplus of polymerizable or crosslinkable material is used so th at when the male and female halves of the mold are closed, the excess amount of the material is expelled out into an overflow area adjacent to the mold cavity. The polymerizable or crosslinkable material remaining within the mold is polymerized or cross-linked by means of actinic radiation (e.g., UV irradiation, ionized radiation, microwave irradiation or by means of heating. Both the starting material in the mold cavity and the excess material in the overflow area are thereby hardened. In order to obtain error-free separation of the contact lens fro m the excess material, a good seal or expulsion of the excess material must be achieved in the contact zone of the two mold halves. Only in this way can contact lenses without erroneous edges be obtained. In these conventional mold processes, the geometry of a contact lenses to be manufactured is defined by the mold cavity, and the geometry of the edge of the contact lens is defined by the contour of the two mold halves in the area in whi ch they touch one another.

There are some disadvantages associated with a conventional full-molding process using disposable molds. For example, manufacturing cost of contact lenses could be still high due to the time and cost for the manufacturing of disposable molds. Molds used in a conventional full-molding process typically are plastic molds (polypropylene or polystyrene), which are produced by injection molding and are only used once. This is because, among other things, the molds are partially contaminated by the surplus material, are damaged when the contact lens is separated or are irreversibly deformed in some areas when the mold is closed. In particular, because of the quality requirements of the contact lenses edges, the molds are only used once, since a certain amount of deformation of the molds at the area of their edge cannot be excluded with certainty.

Examples of other disadvantages are variations in the dimensions of disposable molds and thereby variation in contact lenses produced therefrom. It is expected that, during injection-molding, fluctuations in the dimensions of molds can occur as a result of fluctuations in the production process (temperatures, pressures, material properties). It is also possible for the molds to non-uniformly shrink after the injection molding. These dimensional changes in the mold may lead to fluctuations in the parameters of contact lenses to be produced (peak refractive index, diameter, basic curve, central thickness etc.), as a result of which the quality of the lens is diminished, and hence the yield is reduced. Moreover, in the event of insufficient sealing between the two mold halves, the excess material is not separated cleanly, so that so-called webs are formed on the rim of the contact lens. If it is more pronounced, this cosmetic fault at the rim of the lens can also lead to irritation when such a lens is worn, for which reason such lenses have to be sorted out by means of an inspection. In addition, because of unavoidable fluctuations in the dimensions of disposable molds, there is relatively low fidelity in reproducing all features of a lens design and therefore a full-mold process using disposable molds may not be suitable for making a contact lens having a relatively complex surface design.

European Patent EP 0 637 490 B1 describes a process by means of which a further improvement in the production process of contact lenses from crosslinkable prepolymers, such as, for example, crosslinkable prepolymers described in US Patent Nos. 5,508,317, 5,583,163, 5,789,464 and 5,849,810, can be achieved. In this case, a lens-forming material (a prepolymer solution) is introduced into a mold consisting of two mold halves, the two mold halves not touching each other but having a thin gap of annular design arranged between them. The gap is connected to the mold cavity, so that excess lens forming material can flow away into the gap. The crosslinking of the lens-forming material in the mold cavity is carried out by means of actinic irradiation, in particular UV light, under spatial limitation of actinic irradiation (e.g., by means of a chromium mask). Thus, only the lens-forming material which is in the unmasked area in the mold cavity is crosslinked, whereas the lens-forming material located in the masked area (behind the mask, such as in the gap). High reproducibility of the rim shaping of the lens can be achieved without a positive connection between the two mold halves made of polypropylene or polystyrene. The uncrosslinked, shadowed prepolymer solution can easily be washed away from the dimensionally stable, crosslinked lens by using a suitable washing media (e.g. water). Instead of polypropylene or polystyrene molds that can be used only once, it is possible to use reusable quartz/glass molds or reusable plastic molds, since, following the production of a lens, these molds can be cleaned rapidly and effectively of the uncrosslinked prepolymer and other residues, using water, on account of the water-soluble basic chemistry, and can be blown dried with air. By this means, high volume molding of contact lenses with high precision and reproducibility can in particular be achieved.

However, some problems sometimes may show up in the production of contact lenses using a process described in European Patent EP 0 637 490 B1. In particular, the quality of the edges of produced contact lenses may not be satisfactory. The edge of a produced contact lens may have defects, such as, for example, uneven edge (or edge flash), double edge, uneven edge surface, and the like. This problem related to the edge quality of a contact lens may have adverse impacts on production yield and lens quality.

Therefore, there still a need for a process for producing contact lenses with relatively high edge quality and with relatively high precision and fidelity in reproducing a desired lens design.

### SUMMARY OF THE INVENTION

The invention provides a method for producing a contact lens with relatively high edge quality and with relatively high precision and fidelity in reproducing a desired lens design. The method comprises the steps of: (1) obtaining a fluid composition comprising a lens-forming material and a radical scavenger, wherein the lens-forming material is crosslinkable and/or polymerizable by actinic radiation, wherein the radical scavenger is present in the fluid composition in an amount sufficient to provide an induction time which is equal to or larger than that caused by oxygen present in the fluid composition and which is from 5% to 50% of initial cure time; (2) introducing the fluid composition into a cavity formed by a mold, wherein the mold has a first mold half with a first molding surface and a second mold half with a second molding surface, wherein said first and second mold halves are configured to receive each other such that a cavity is formed between said first and second molding surfaces; and (3) crosslinking and/or polymerizing the lens-forming material under a spatial limitation of actinic radiation to form the contact lens having a first surface, an opposite second surface and an edge, wherein the first surface is defined by the first molding surface, the second surface is defined by the second molding surface, and the edge is defined by the spatial limitation of actinic irradiation, and wherein the radical scavenger present in the fluid composition reduces substantially the crosslinking and/or polymerizing of the lens-forming material outside of and around the spatial limitation of actinic radiation so that the quality of the edge is improved, according to claim 1.

The present invention provides the foregoing and other features, and the advantages of the invention will become further apparent from the following detailed description of the presently preferred embodiments, read in conjunction with the accompanying figures. The detailed description and figures are merely illustrative of the invention and do not limit the scope of the invention, which is defined by the appended claims and equivalents thereof.

### BRIEF DESCRIPTION OF THE DRAWINGS

Fig. 1 is a cross-sectional view of a mold in the closed position, which is used in a process of the invention according to a preferred embodiment.
Fig. 2 is a cross-sectional view of the male mold half of the mold from Fig. 1.
Fig. 3 is a cross-sectional view of the female mold half of the mold from Fig- 1.
Fig. 4 shows a cross-sectional view of an assembled female mold half according to a preferred embodiment.
Fig. 5 shows a cross-sectional view of an assembled male mold half according to a preferred embodiment.

### DETAILED DESCRIPTION OF THE PREFERRED EMBODIMENTS

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below a re those well known and commonly employed in the art. As employed throughout the disclosure, the following terms, unless otherwise indicated, shall be understood to have the following meanings.

The term "contact lens" employed herein in a broad sense and is intended to encompass any hard or soft lens used on the eye or ocular vicinity for vision correction, diagnosis, sample collection, drug delivery, wound healing, cosmetic appearance (e.g., eye color modification), or other ophthalmic applications.

A "hydrogel material" refers to a polymeric material which can absorb at least 10 percent by weight of water when it is fully hydrated. Generally, a hydrogel material is obtained by polymerization or copolymerization of at least one hydrophilic monomer in th e presence of or in the absence of additional monomers and/or macromers. Exemplary hydro gels include, but are not limited to, poly(vinyl alcohol) (PVA), modified polyvinylalcohol (e.g., as nelfilcon A), poly(hydroxyethyl methacrylate), poly(vinyl pyrrolidone), PVAs with polycarboxylic acids (e.g., carbopol), polyethylene glycol, polyacrylamide, polymethacrylamide, silicone-containing hydrogels, polyurethanes, polyureas, and the like. A hydrogel can be prepared according to any methods known to a person skilled in the art.

The term "fluid" as used herein indicates that a material is capable of flowing like a liquid.

A "lens-forming material" refers to a material which can be polymerized and/or crosslinked by actinic radiation to form a contact lens. A lens-forming material can be any materials known to a skilled artisan. For example, a lens-forming material can be a prepolymer, a mixture of prepolymers, a mixture of monomers, or a mixture of one or more prepolymers and one or more monomers and/or macromers. A lens-forming material can further include other components, such as a photoinitiator, a visibility tinting agent, UV-blocking agent, photosensitizers, and the like.

Actinic radiation refers to radiation of a suitable form of energy. Examples of actinic radiation includes without limitation light radiation (e.g., UV radiation), gamma radiation, electron radiation, X-ray irradiation, microwave irradiation, thermal radiation and the like.

A "monomer" means a low molecular weight compound that can be polymerized. Low molecular weight typically means average molecular weights less than 700 Daltons.

A "hydrophilic vinylic monomer" refers to a monomer which as a homopolymer typically yields a polymer that is water-soluble or can absorb at least 10 percent by weight of water.

A "macromer" refers to medium and high molecular weight compounds or polymers that contain functional groups capable of further polymerization. Medium and high molecular weight typically means average molecular weights greater than 700 Daltons.

"Molecular weight" of a polymeric material (including monomeric or macromeric materials), as used herein, refers to the number-average molecular weight unless otherwise specifically noted or unless testing conditions indicate otherwise.

A "polymer" means a material formed by polymerizing one or more monomers.

A "prepolymer" refers to a starting polymer which can be polymerized and/or crosslinked upon actinic radiation to obtain a crosslinked polymer having a molecular weight much higher than the starting polymer.

A "photoinitiator" refers to a substance that can initiate free radical polymerization and/or crosslinking by the use of light. Suitable photoinitiators are benzoin methyl ether, diethoxyacetophenone, a benzoylphosphine oxide, 1-hydroxycyclohexyl phenyl ketone and Darocur and Irgacur types, preferably Darocur 1173® and Darocur 2959®. Examples of benzoylphosphine initiators include 2,4,6-trimethylbenzoyldiphenylo-phosphine oxide; bis-(2,6-dichlorobenzoyl)-4-N-propylphenylphosphine oxide; and bis-(2,6-dichlorobenzoyl)-4-N-butylphenylphosphine oxide. Reactive photoinitiators which can be incorporated, for example, into a macromer or can be used as a special monomer are also suitable. Examples of reactive photoinitiators are those disclosed in EP 0 632 329. The polymerization can then be triggered off by actinic radiation, for example light, in particular UV light of a suitable wavelength. The spectral requirements can be controlled accordingly, if appropriate, by addition of suitable photosensitizers.

A "visibility tinting agent" refers to a substance that dyes (or colors) a contact lens to enable a user to easily locate a contact lens in a clear solution within a lens storage, disinfecting or cleaning container. It is well known in the art that a dye and/or a pigment can be used as a visibility tinting agent.

A "dye" means a substance that is soluble in a solvent and that is used to impart color. Dyes are typically translucent and absorb but do not scatter light. Any suitable biocompatible dye can be used in the present invention.

A "pigment" means a powdered substance that is suspended in a liquid in which it is insoluble. A pigment can be a fluorescent pigment, phosphorescent pigment, pearlescent pigment, or conventional pigment. While any suitable pigment may be employed, it is presently preferred that the pigment be heat resistant, non-toxic and insoluble in aq ueous solutions. Examples of preferred pigments include (C.I. is the color index no.), without limitation, for a blue color, phthalocyanine blue (pigment blue 15:3, C.I. 74160), cobalt blue (pigment blue 36, C.I. 77343), Toner cyan BG (Clariant), Permajet blue B2G (Clariant); for a green color, phthalocyanine green (Pigment green 7, C.I. 74260) and chromium sesquioxide; for yellow, red, brown and black colors, various iron oxides; PR122, PY154, for violet, carbazole violet; for black, Monolith black C-K (CIBA Specialty Chemicals).

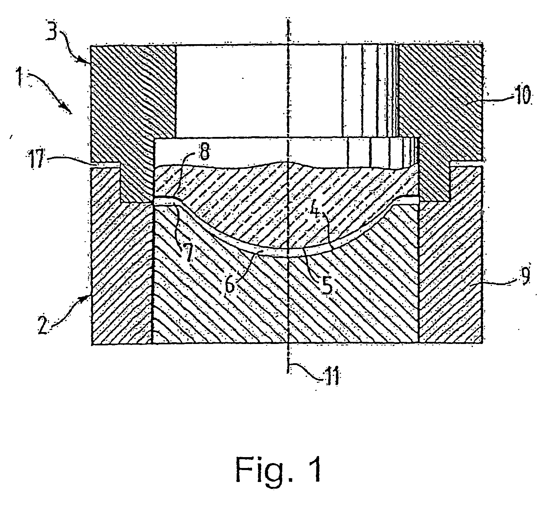

A "spatial limitation of actinic radiation" refers to an act or process in which energy radiation in the form of rays is directed by means of, for example, a mask or screen or combinations thereof, to impinge, in a spatially restricted manner, onto an area having a well defined peripheral boundary. For example, a spatial limitation of UV radiation can be achieved by using a mask or screen which has a transparent or open region (unmasked region) surrounded by a UV impermeable region (masked region), as schematically illustrated in Figs 1-3. The unmasked region has a well defined peripheral boundary with the unmasked region.

The term "induction time" refers to a time delay in the onset of curing of a lens-forming material with actinic radiation, e.g., UV radiation, at a given intensity, caused by the presence of a radical scavenger in the lens-forming material. The induction time represents a time required for the radical scavenger to be fully consumed in a reaction between the scavenger and radicals. Polymerization of the lens-forming material begins only after the radical scavenger is fully consumed.

The term "initial cure time" in reference to a first fluid composition with radical scavengers, including oxygen, means time required for curing a second fluid composition without radical scavenger, wherein the first fluid composition differs only from the second fluid composition in the amounts of the radical scavengers (the first one with the radical scavengers and the second one without the radical scavengers). Determination of initial cure time can be obtained according to any known suitable methods, for example, photorheology studies (study of viscosity as function of irradiation time under a constant energy exposure) or UV kinetic studies (study of UV absorbance as function of irradiation time under a constant energy exposure). Typically, a total cure time for a fluid composition with radical scavenger is the sum of an induction time and an initial cure time.

The instant invention pertains to a method for producing contact lenses with relatively high edge quality. The method of the invention involves: a mold which has a first mold half with a first molding surface and a second mold half with a second molding surface, wherein said first and second mold halves are configured to receive each other such that the cavity is formed between said first and second molding surfaces; a spatial limitation of actinic radiation; and addition of a radical scavenger in a fluid composition comprising a lens-forming material; as set out in claim 1.

The invention provides a method for producing a contact lens with relatively high edge quality and with relatively high precision and fidelity in reproducing a desired lens design. The method comprises the steps of: (1) obtaining a fluid composition comprising a lens-forming material and a radical scavenger, wherein the lens-forming material is crosslinkable and/or polymerizable by actinic radiation, wherein the radical scavenger is present in the fluid composition in an amount sufficient to provide an induction time which is equal to or larger than that caused by oxygen present in the fluid composition and which is from 5% to 50% of initial cure time; (2) introducing the fluid composition into a cavity formed by a mold, wherein the mold has a first mold half with a first molding surface and a second mold half with a second molding surface, wherein said first and second mold halves are configured to receive each other such that the cavity is formed between said first and second molding surfaces; and (3) crosslinking and/or polymerizing the lens-forming material under a spatial limitation of actinic radiation to form the contact lens having a first surface, an opposite second surface and an edge, wherein the first surface is defined by the first molding surface, the second surface is defined by the second molding surface, and the edge is defined by the spatial limitation of actinic irradiation, and wherein the radical scavenger present in the fluid composition reduces substantially the crosslinking/polymerizing of the lens-forming material outside of and around the spatial limitation of actinic radiation so that the quality of the edge is improved; according to claim 1.

In accordance with this method of the invention, the two opposite surfaces (anterior surface and posterior surface) of a contact lens are defined by the two molding surfaces while the edge is defined by the spatial limitation of actinic irradiation. Under ideal conditions, only the lens-forming material within a region bound by the two molding surfaces and the projection of the well defined peripheral boundary of the spatial limitation is crosslinked whereas any lens-forming material outside of and immediately around the peripheral boundary of the spatial limitation is not crosslinked, and thereby the edge of the contact lens should be smooth and precise duplication of the dimension and geometry of the spatial limitation of actinic radiation. However, in practice, although the lens-forming material outside of and immediately around the peripheral boundary of the spatial limitation is not subjected to impingements of directly incident actinic radiation, it may still be impinged by diffused, scattered and/or reflected incident actinic radiation. This result is caused by the fact that when impinging on some parts of a mold the incident actinic radiation can be diffused, scattered and/or reflected, that any mask has a finite thickness leading to some diffusion of incident actinic radiation, and that the incident actinic radiation may be scattered when it passes through the fluid composition because of the presence of impurities and the like. The diffused, scattered and/or reflected incident actinic radiation can cause some crosslinking/polymerization of the lens-forming material to occur outside of and immediately around the peripheral boundary of the spatial limitation.

It is discovered that energy exposure (E) may play an important role in controlling the extent of crosslinking and/or polymerizing, caused by diffused, scattered and/or reflected incident actinic radiation, of the lens-forming material outside of and immediately around the peripheral boundary of the spatial limitation. Energy exposure (E) is defined as the amount of energy striking a surface and measured in term of energy/area (joules/cm²). A fluid composition generally needs to be subjected to a minimal energy exposure to cause a sufficient crosslinking and/or polymerizing of the lens-forming material to form gel. It is believed that only a small fraction of incident actinic radiation can be diffused, scattered and/or reflected by the mask, mold parts and the fluid composition. By strictly limiting the energy exposure of incident actinic radiation to a minimum amount for curing the fluid composition, one may be able to minimize the crosslinking and/or polymerizing of the lens forming material outside of and immediately around the peripheral boundary of the spatial limitation. Energy exposure would then have to be regulated within a narrow range. But, such measure may not be feasible or cost effective in a production environment.

It has been discovered that the presence of the radical scavenger in a fluid composition for making contact lenses under spatial limitation of actinic radiation can reduce substantially the crosslinking and/or polymerizing, caused by diffused, scattered and/or reflected incident actinic radiation, of the fluid composition outside of and around the spatial limitation of actinic radiation, so that the quality of the edge is improved. It is believed that the radical scavenger present in a fluid composition needs to consume a certain percentage of energy exposure before the onset of crosslinking and/or polymerizing of the lens forming material contained in the fluid composition. The percentage of consumed energy exposure to directly incident actinic radiation is much smaller than the percentage of consumed energy exposure to diffused, scattered and/or reflected incident actinic radiation. By adding a radical scavenger in a fluid composition for making contact lenses under spatial limitation of actinic radiation, the production can be much more robust and the range of tolerable energy exposure can be substantially broadened.

In accordance with the present invention, the effective amount of a radical scavenger to be added in a fluid composition is characterized by the ratio of the induction time to the initial cure time. Initial cure time is defined as a time required for curing a fluid composition (without radical scavenger to be added) before adding the radical scavenger. Cure time depends on, *inter alia,* the intensity of actinic radiation and the concentration of radical initiator in a fluid composition.

Preferably, a radical scavenger is present in an amount sufficient to have an induction time which is at least equal to induction time due to oxygen presence in a fluid composition. Oxygen is a radical scavenger. Due to the limited presence of oxygen in a fluid composition for making contact lenses, oxygen can not be effective in minimizing the crosslinking and/or polymerizing, caused by diffused, scattered and/or reflected incident actinic radiation, of the fluid composition outside of and around the spatial limitation of actinic radiation. Moreover, the concentration of oxygen in a fluid composition for making contact lenses can vary depending its preparation history and temperature. Addition of a radical scavenger in the fluid composition can provide an increased induction time. Preferably, 50% or less of a total induction time is caused by oxygen and the rest is caused by the scavenger. Variation in oxygen concentration thereby has less impacts on the edge quality of contact lenses produced according to a method of the invention.

By increasing the concentration of a radical scavenger in a fluid composition, one can minimize crosslinking/polymerizing of the lens forming material outside of and immediately around the peripheral boundary of the spatial limitation is minimized over a widen range of energy exposure, leading to a more robust process for producing contact lenses. However, if the concentration of a radical scavenger in a fluid composition is too high, it may affect adversely the efficiency of lens production, production cost associated with energy consumption, and/or optical and mechanical properties of produced contact lenses. In accordance with the present invention, the amount of a radical scavenger in a fluid composition is to provide an induction time which is from 5% to 50%, preferably from 5% to 25%, more preferably from 6% to 15%, of initial cure time. It is found that with such amount of a radical scavenger present in a fluid composition, the radical scavenger can have minimal adverse effects on the optical and mechanical properties of contact lenses produced from the fluid composition.

In accordance with the present invention, any radical scavenger can be used as long as it can be dissolved in a fluid composition to be used. Examples of radical scavengers include, but are not limited to, N-oxyl or nitroxide compounds, quinone methides, nitroso compounds, phenothiazine, phenols, and naturally-occurring antioxidant free-radical scavengers. Examples of naturally-occurring antioxidant free-radical scavengers include without limitation vitamin C (ascorbic acid), Vitamin E (tocopherols and tocotrienols, in particular the corresponding γ-homologs) and citric acid. Preferably, the radical scavenger is TEMPO (4-hydroxy-2,2,6,6,-tetramethyl-1-piperidinyloxy, free radical) (CAS# 2226-96-2). More preferably, the radical scavenger is a naturally-occurring antioxidant free-radical scavenger.

In accordance with the present invention, a fluid composition is a solution of a lens-forming material in the presence of a radical scavenger or a solvent-free liquid or melt of a lens-forming material in the presence of a radical scavenger. A lens-forming material can be any materials known to a skilled artisan. For example, a lens-forming material can comprise one or more prepolymers, optionally one or more monomers and/or macromers and optionally further include various components, such as photoinitiator, visibility tinting agent, fillers, and the like.

It should be understood that any silicone-containing prepolymers or any silicone-free prepolymers can be used in the present invention.

A solution of a lens-forming material can be prepared by dissolving the lens-forming material in any suitable solvent known to a person skilled in the art. Examples of suitable solvents are water, alcohols, such as C₁-C₇-alkanols, for example ethanol or methanol, and furthermore carboxylic acid amides, such as dimethylformamide, dipolar aprotic solvents, such as dimethyl sulfoxide or methyl ethyl ketone, ketones, for example acetone or cyclohexanone, hydrocarbons, for example toluene, ethers, for example THF, dimethoxyethane or dioxane, and halogenated hydrocarbons, for example trichloroethane, and also mixtures of suitable solvents, for example mixtures of water with an alcohol, for example a water/ethanol or a water/methanol mixture.

A preferred group of lens-forming materials are prepolymers which are water-soluble and/or meltable. It would be advantageous that a lens-forming material comprises primarily one or more prepolymers which are preferably in a substantially pure form (e.g., purified by ultrafiltration). Therefore, after crosslinking/polymerizing by actinic radiation, a contact lens may require practically no more subsequent purification, such as complicated extraction of unpolymerized constituents. Furthermore, crosslinking/polymerizing may take place solvent-free or in aqueous solution, so that a subsequent solvent exchange or the hydration step is not necessary.

One example of a preferred prepolymer is a water-soluble crosslinkable poly(vinyl alcohol) prepolymer. More preferably, a water-soluble crosslinkable poly(vinyl alcohol) prepolymer is a polyhydroxyl compound which is described in U.S. Pat. Nos. 5,583,163 and 6,303,687 and has a molecular weight of at least about 2000 and which comprises from 0.5 to 80%, based on the number of hydroxyl groups in the poly(vinyl alcohol), of units of the formula I, I and II, I and III, or I and II and III

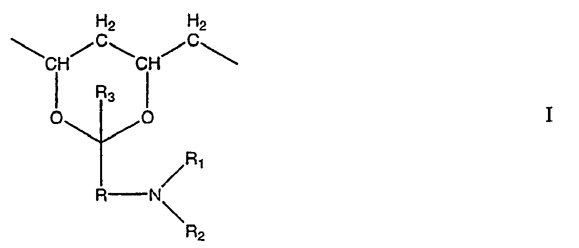

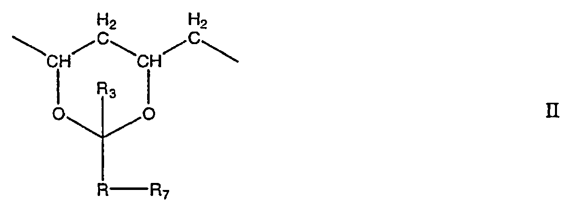

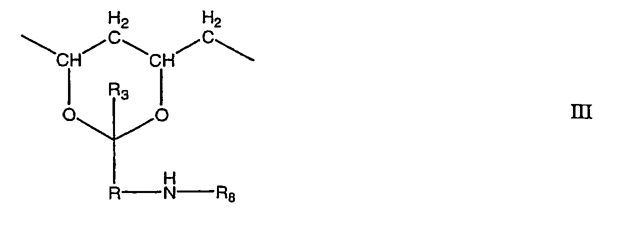

In formula I, II and III, the molecular weight refers to a weight average molecular weight, Mw, determined by gel permeation chromatography.

In formula I, II and III, R₃ is hydrogen, a C₁-C₇ alkyl group or a cycloalkyl group.

In formula I, II and III, R is alkylene having up to 12 carbon atoms, preferably up to 8 carbon atoms, and can be linear or branched. Suitable examples include octylene, hexylene, pentylene, butylene, propylene, ethylene, methylene, 2-propylene, 2-butylene and 3-pentylene. Alkylene R preferably has up to 7, particularly preferably up to 4 carbon atoms. Methylene and butylene are particularly preferred.

In the formula I, R₁ is hydrogen or alkyl having up to seven, in particular up to four, carbon atoms. Most preferably, R₁ is hydrogen.

In the formula I, R₂ is an olefinically unsaturated, electron-withdrawing, crosslinkable radical, preferably having up to 25 carbon atoms. In one embodiment, R₂ is an olefinically unsaturated acyl radical of the formula R₄-CO-, in which R₄ is an olefinically unsaturated, crosslinkable radical having 2 to 24 carbon atoms, preferably having 2 to 8 carbon atoms, particularly preferably having 2 to 4 carbon atoms.

The olefinically unsaturated, crosslinkable radical R₄ having 2 to 24 carbon atoms is preferably alkenyl having 2 to 24 carbon atoms, in particular alkenyl having 2 to 8 carbon atoms, particularly preferably alkenyl having 2 to 4 carbon atoms, for example ethenyl, 2-propenyl, 3-propenyl, 2-butenyl, hexenyl, octenyl or dodecenyl. Ethenyl and 2-propenyl are preferred, so that the -CO-R₄ group is the acyl radical of acrylic acid or methacrylic acid.

In another embodiment, the radical R₂ is a radical of the formula IV, preferably of the formula V

-CO-NH-(R₅-NH-CO-O)_{q}-R₆-O-CO-R₄ (IV)

-[CO-NH-(R₅-NH-CO-O)_{q}-R₆-O]ₚ-CO-R₄ (V)

in which p and q, independently of one another, are zero or one, and R₅ and R₆, independently of one another, are alkylene having 2 to 8 carbon atoms, arylene having 6 to 12 carbon atoms, a saturated bivalent cycloaliphatic group having 6 to 10 carbon atoms, arylenealkylene or alkylenearylene having 7 to 14 carbon atoms or arylenealkylenearylene having 13 to 16 carbon atoms, and in which R₄ is as defined above.

Alkylene R₅ or R₆ preferably has 2 to 6 carbon atoms and is, in particular, linear. Suitable examples include propylene, butylene, hexylene, dimethylethylene and, particularly preferably, ethylene.

Arylene R₅ or R₆ is preferably phenylene, which is unsubstituted or substituted by C₁-C₇-alkyl or C₁-C₇-alkoxy, in particular 1,3-phenylene or 1,4-phenylene or methyl-1 ,4-phenylene.

A saturated bivalent cycloaliphatic group R₅ or R₆ is preferably cyclohexylene or cyclohexylene(C₁-C₇-alkylene), for example cyclohexylenemethylene, which is unsubstituted or substituted by one or more methyl groups, for example trimethylcyclohexylenemethylene, for example the bivalent isophorone radical.

The arylene unit of alkylenearylene or arylenealkylene R₅ or R₆ is preferably phenylene, unsubstituted or substituted by C₁-C₇-alkyl or C₁-C₇-alkoxy, and the alkylene unit thereof is preferably C₁-C₇-alkylene, such as methylene or ethylene, in particular methylene. Radicals R₅ or R₆ of this type are therefore preferably phenylenemethylene or methylenephenylene.

Arylenealkylenearylene R₅ or R₆ is preferably phenylene(C₁-C₇-alkylene)phenylene having up to 4 carbon atoms in the alkylene unit, for example phenyleneethylenephenylene.

The radicals R₅ and R₆ are preferably, independently of one another, alkylene having 2 to 6 carbon atoms, phenylene, unsubstituted or substituted by C₁-C₇-alkyl, cyclohexylene or cyclohexylene(C₁-C₇-alkylene), unsubstituted or substituted by C₁-C₇-alkyl, phenylene(C₁-C₇-alkylene), (C₁-C₇-alkylene)phenylene or phenylene(C₁-C₇-alkylene)phenylene.

In the formula II, R₇ is a primary, secondary or tertiary amino group or a quaternary ami no group of the formula N⁺(R')₃X⁻, in which each R', independently of the others, is hydrogen or a C₁-C₄ alkyl radical and X is a counterion, for example HSO₄⁻, F⁻, Cl⁻, Br⁻, I⁻, CH₃ COO⁻, OH⁻, BF⁻, or H₂PO₄⁻.

The radicals R₇ are, in particular, amino, mono- or di(C₁-C₇-alkyl)amino, mono- or diphenylamino, (C₁-C₇-alkyl)phenylamino or tertiary amino incorporated into a heterocyclic ring, for example -NH2, -NH-CH₃, -N(CH₃)₂, -NH(C₂H₅), -N(C₂H₅)₂, -NH(phenyl),-N(C₂H₅)phenyl or

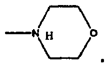

In the formula III, R₈ is the radical of a monobasic, dibasic or tribasic, saturated or unsaturated, aliphatic or aromatic organic acid or sulfonic acid. Preferred radicals R₈ are derived, for example, from chloroacetic acid, succinic acid, glutaric acid, adipic acid, pimelic acid, maleic acid, fumaric acid, itaconic acid, citraconic acid, acrylic acid, methacrylic acid, phthalic acid and trimellitic acid.

Alkyl has, in particular, up to 7 carbon atoms, preferably up to 4 carbon atoms, and is, for example, methyl, ethyl, propyl, butyl or tert-butyl.

Alkoxy has, in particular, up to 7 carbon atoms, preferably up to 4 carbon atoms, and is, for example, methoxy, ethoxy, propoxy, butoxy or tert-butoxy.

The bivalent group -R₅-NH-CO-O- is present if q is one and absent if q is zero. Poly(vinyl alcohol)s containing crosslinkable groups in which q is zero are preferred.

The bivalent group -CO-NH-(R₅-NH-CO-O)q -R₆-O- is present if p is one and absent if p is zero. Poly(vinyl alcohol)s containing crosslinkable groups in which p is zero are preferred.

In the poly(vinyl alcohol)s comprising units containing crosslinkable groups in which p is one, the index q is preferably zero. Particular preference is given to poly(vinyl alcohol)s comprising crosslinkable groups in which p is one, the index q is zero and R₅ is C₁-C₇-alkylene.

In the formula N⁺(R')₃X⁻, R' is preferably hydrogen or C₁-C₃ alkyl, and X is halide, acetate or phosphite, for example -N⁺(C₂H₅)₃CH₃COO⁻, -N⁺(C₂H₅)₃Cl⁻, and -N⁺(C₂H₅)₃H₂PO₄⁻.

A water-soluble crosslinkable poly(vinyl alcohol) according to the invention is more preferably a polyhydroxyl compound which has a molecular weight of at least about 2000 and which comprises from 0.5 to 80%, preferably from 1 to 50%, more preferably from 1 to 25%, even more preferably from 2 to 15%, based on the number of hydroxyl groups in the poly(vinyl alcohol), of units of the formula I, wherein R is C₁-C₇-alkylene having up to 6 carbon atoms, R₁ is hydrogen or C₁-C₇-alkyl, R₃ is hydrogen, and R₂ is a radical of formula (V). Where p is zero, R₄ is preferably C₂ - C₈ alkenyl. Where p is one and q is zero, R₆ is preferably C₂ - C₆ alkylene and R₄ is preferably C₂ - C₈ alkenyl. Where both p and q are one, R₅ is preferably C₂ - C₆ alkylene, phenylene, unsubstituted or C₁-C₇-alkyl-substituted cyclohexylene or cyclo hexylene-C₁-C₇-alkylene, unsubstituted or C₁-C₇-alkyl-substituted phenylene-C₁-C₇-alkylene, C₁-C₇-alkylene-phenylene, or phenylene-C₁-C₇-alkylene-phenylene, R₆ is preferably C₂ - C₆ alkylene, and R₄ is preferably C₂ - C₈ alkenyl.

Crosslinkable poly(vinyl alcohol)s comprising units of the formula I, I and II, I and III, or I and II and III can be prepared in a manner known per se. For example, U.S. pat. Nos. 5,583,163 and 6,303,687 disclose and teach how to prepare crosslinkable polymers comprising units of the formula I, I and II, I and III, or I and II and III.

Another example of a preferred prepolymer according to the invention is a water-soluble vinyl group-terminated polyurethane which is obtained by reacting an isocyanate-capped polyurethane with an ethylenically unsaturated amine (primary or secondary amine) or an ethylenically unsaturated monohydroxy compound. The isocyanate-capped polyurethane can be a copolymerization product of at least one polyalkylene glycol, a compound containing at least 2 hydroxyl groups, and at least one compound with two or more isocyanate groups. Preferably, the isocyanate-capped polyurethane is a copolymerization product of
(a) at least one polyalkylene glycol of formula

   HO-(R₉-O)n-(R₁₀-O)m-(R₁₁ -O)I-H (1)

   wherein R₉, R₁₀, and R₁₁, independently of one other, are each linear or branched C₂-C₄-alkylene, and n, m and I, independently of one another, are each a number from 0 to 100, wherein the sum of (n+m+l) is 5 to 100,
(b) at least one branching agent selected from the group consisting of
   (i) a linear or branched aliphatic polyhydroxy compound of formula

      R₁₂-(OH)ₓ (2),

      wherein R₁₂ is a linear or branched C₃-C₁₈ aliphatic multi-valent radical and x is a number ≥ 3,
   (ii) a polyether polyol, which is the polymerization product of a compound of formula (2) and a glycol,
   (iii) a polyester polyol, which is the polymerization product of a compound of formula (2), a dicarboxylic acid or a derivative thereof and a diol, and
   (iv) a cycloaliphatic polyol selected from the group consisting of a C₅-C₈-cycloal kane which is substituted by ≥ 3 hydroxy groups and which is unsubstituted by alkyl radical, a C₅-C₈-cycloalkane which is substituted by ≥ 3 hydroxy groups and which is substituted by one or more C₁-C₄ alkyl radicals, and an unsubstituted mono- and disaccharide,
   (v) an aralkyl polyol having at least three hydroxy C₁-C₄ alkyl radicals, and
(c) at least one di- or polyisocyanate of formula

   R₁₃-(NCO)_{y} (3)

   wherein R₁₃ a linear or branched C₃-C₂₄ aliphatic polyisocyanate, the radical of a C₃-C₂₄ cycloaliphatic or aliphatic-cycloaliphatic polyisocyanate, or the radical of a C₃-C₂₄ aromatic or araliphatic polyisocyanate, and y is a number from 2 to 6.

The isocayanate-capped polyurethane polymers according to the invention may be produced by following a solventless process. For example, in a solventless process, first one or more polyalkylene glycols of formula (1) (component (a)) is mixed with one or more branching agents (component (b)) and the mixture is heated to and maintained at a melting temperature or above. Then, at least one di- or polyisocyanate of formula (3) (compone nt (c)) is added to the melted mixture to make a melted reaction mixture comprising component (a), component (b) and component (c) in a desired stoichiometry. The temperature of the melted reaction mixture is continuously and thoroughly stirred at the melting temperature or above and preferably under an inert atmospheric environment (for example, in nitrogen or argon atmosphere). Reaction is monitored by, for example, monitoring the isocyanate peak in FT-IR spectroscopy. Components (a) - (c) are all known compounds or compound mixtures, or may be obtained in accordance with methods known *per se.*

Another group of preferred prepolymers is disclosed in US 5,849,841. Suitable optical materials disclosed therein include derivatives of a polyvinyl alcohol, polyethyleneimine or polyvinylamine which contains from 0.5 to 80%, based on the number of hydroxyl groups in the polyvinyl alcohol or the number of imine or amine groups in the polyethyleneimine or polyvinylamine, respectively, of units of the formula VI and VII: 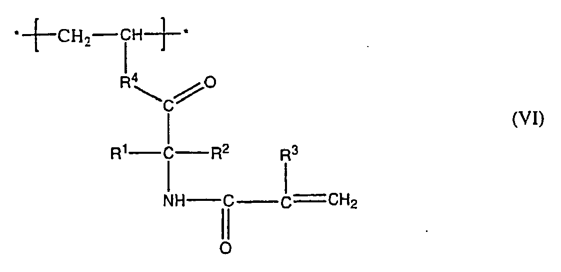 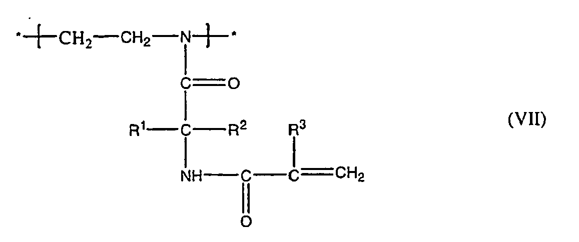 wherein R¹ and R² are, independently of one another, hydrogen, a C₁-C₈ alkyl group, an aryl group, or a cyclohexyl group, wherein these groups are unsubstitued or substituted; R³ is hydrogen or a C₁-C₈ alkyl group, preferably is methyl; and R⁴ is an -O- or -NH- bridge, preferably is -O-. Polyvinyl alcohols, polyethyleneimines and polyvinylamines suitable for the present invention have a number average molecular weight between 2000 and 1,000,000, preferably between 10,000 and 300,000, more preferably between 10,000 and 100,000, and most preferably 10,000 and 50,000. A particularly suitable polymerizable optical material is a water-soluble derivative of a polyvinyl alcohol having between 0.5 to 80%, preferably between 1 and 25%, more preferably between 1.5 and 12%, based on the number of hydroxyl groups in the polyvinyl alcohol, of the formula III that has methyl groups for R¹ and R², hydrogen for R³, -O- (i.e., an ester link) for R⁴.

The prepolymers of the formulae VI and VII can be produced, for example, by reacting an azalactone of the formula VIII, 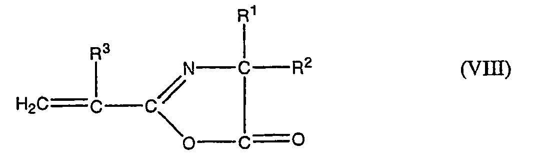 wherein R¹, R² and R³ are as defined above, with a polyvinyl alcohol, polyethyleneimine or polyvinylamine at elevated temperature, between about 55 °C and 75 °C, in a suitable organic solvent, optionally in the presence of a suitable catalyst. Suitable solvents are those which dissolve the polymer backbone and include aproctic polar solvents, e.g., formamide, dimethylformamide, hexamethylphosphoric triamide, dimethyl sulfoxide, pyridine, nitromethane, acetonitrile, nitrobenzene, chlorobenzene, trichloromethane and dioxane. Suitable catalyst include tertiary amines, e.g., triethylamine, and organotin salts, e.g., dibutyltin dilaurate.

A further example of a preferred prepolymer is a water-soluble crosslinkable polyurea prepolymer as described in US Patent No. 6,479,587. A preferred polyurea prepolymer generally has a formula

Q-CP-Q (4)

in which Q is an organic radical that comprises at least one crosslinkable group (carbon-carbon double bond) and CP is a bivalent copolymer fragment consisting of the segments A, B and T, provided that a segment A or B is always followed by a segment T which is followed by a segment A or B in the copolymer fragment CP and that the radical Q in formula (4) is bonded to a segment A or B.

In formula (4) the segment A is a bivalent radical of formula
- R₁₄N-A₁--NR₁₄'- (5a) in which A₁ is the bivalent radical of a polyalkylene glycol or is a linear or branched alkylene radical having from 2 to 24 carbon atoms and each of R₁₄ and R₁₄' independently of the other is hydrogen or unsubstituted or substituted C₁-C₆alkyl or, in the case of the amino group that terminates the copolymer fragment, may also be a direct, ring-forming bond.

In formula (4), the segment T is a bivalent radical of formula 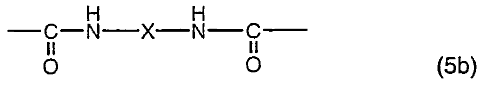 in which X is a bivalent aliphatic, cycloaliphatic, aliphatic-cycloaliphatic, aromatic, araliphatic or aliphatic-heterocyclic radical.

In formula (4) the segment B is a radical of formula

-R₁₅N-B₁-NR_{15'}- (5c)

in which each of R₁₅ and R₁₅' independently of the other has the meanings given above for R₁₄, B₁ is a bivalent aliphatic, cycloaliphatic, aliphatic-cycloaliphatic, aromatic or araliphatic hydrocarbon radical that is interrupted by at least one amine group of formula 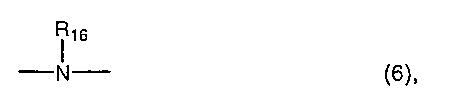 in which R₁₆ is hydrogen, a radical Q mentioned above or a radical of formula

Q-CP'- (7),

in which Q is as defined above, and CP' is a bivalent copolymer fragment independently consisting of at least two of the above-mentioned segments A, B and T, provided that a segment A or B is always followed by a segment T which is followed by a segment A or B in the copolymer fragment CP', that the radical Q in formula (7) is bonded to a segment A or B in each case and that the N atom in formula (6) is bonded to a segment T when R₁₆ is a radical of formula (7).

A crosslinkable polyurea prepolymer can be obtained by reacting an acryloylchloride or an isocyanate group-containing acrylate or methacrylate with a polymerization product of NH₂-terminated polyalkylene glycols and di- or polyisocyanates optionally in the presence of a triamine.

Other exemplary preferred prepolymers include: crosslinkable polyacrylamide, crosslinkable statistical copolymers of vinyl lactam, MMA and a comonomer, which are disclosed in EP 0 655 470 and US 5,712,356; crosslinkable copolymers of vinyl lactam, vinyl acetate and vinyl alcohol, which are disclosed in EP 0 712 867 and US 5,665,840; polyether-polyester copolymers with crosslinkable side chains which are disclosed in EP 0 932 635; branched polyalkylene glycol-urethane prepolymers disclosed in EP 0 958 315 and US 6,165,408; polyalkylene glycol-tetra(meth)acrylate prepolymers disclosed in EP 0 961 941 and U S 6,221,303; and crosslinkable polyallylamine gluconolactone prepolymers disclosed in PCT patent application WO 2000/31150.

In accordance with a preferred embodiment of the invention, a crosslinkable and/or polymerizable material is composed of primarily one or more prepolymers and optionally additional vinylic monomers or acrylamide monomers. Crosslinking or polymerizing is preferably effected whilst solvent-free or essentially solvent-free or directly from an aqueous solution. The prepolymer is preferably in a substantially pure form, for example, as obtained by a purification step, such as ultrafiltration. For example, crosslinking or polymerizing may be undertaken from an aqueous solution containing 15 to 90% of one or more prepolymers.

The vinylic monomer which may be additionally used for photo-crosslinking or polymerizing in accordance with the invention may be hydrophilic, hydrophobic or may be a mixture of a hydrophobic and a hydrophilic vinylic monomer. Suitable vinylic monomers include especially those normally used for the manufacture of contact lenses. A "hydrophilic vinylic monomer" refers to a monomer which as a homopolymer typically yields a polymer that is water-soluble or can absorb at least 10 percent by weight water. A "hydrophobic vinylic monomer" refers to a monomer which as a homopolymer typically yields a polymer that is insoluble in water and can absorb less than 10 percent by weight water.

It is preferable to use a hydrophobic vinylic monomer, or a mixture of a hydrophobic vinylic monomer with a hydrophilic vinylic monomer, whereby this mixture contains at least 50 percent by weight of a hydrophobic vinyl comonomer. In this way, the mechanical properties of the resultant polymer may be improved without the water content dropping substantially. Both conventional hydrophobic vinylic monomers and conventional hydrophilic vinylic monomers are suitable for copolymerization with the prepolymers.

Suitable hydrophobic vinylic monomers include, without limitation, C₁-C₁₈-alkylacrylates and - methacrylates, C₃-C₁₈ alkylacrylamides and -methacrylamides, acrylonitrile, methacrylonitrile, vinyl-C₁-C₁₈-alkanoates, C₂-C₁₈-alkenes, C₂-C₁₈-halo-alkenes, styrene, C₁-C₆-alkylstyrene, vinylalkylethers in which the alkyl moiety has 1 to 6 carbon atoms, C₂-C₁₀-perfluoralkylacrylates and -methacrylates or correspondingly partially fluorinated acrylates and methacrylates, C₃-C₁₂-perfluoralkyl-ethyl-thiocarbonylaminoethyl-acrylates and -methacrylates, acryloxy and methacryloxy-alkylsiloxanes, N-vinylcarbazole, C₁-C₁₂-alkylesters of maleic acid, fumaric acid, itaconic acid, mesaconic acid and the like. Preference is given e.g. to C₁-C₄-alkylesters of vinylically unsaturated carboxylic acids with 3 to 5 carbon atoms or vinylesters of carboxylic acids with up to 5 carbon atoms.

Suitable hydrophilic vinylic monomers include, without limitation, hydroxy-substituted C₁-C₇-alkylacrylates and -methacrylates, acrylamide, methacrylamide, C₁-C₇-alkyl-acrylamides and -methacrylamides, ethoxylated acrylates and methacrylates, hydroxy-substituted C₁-C₇-alkylacrylamides and -methacrylamides, hydroxy-substituted C₁-C₇-alkylvinyl-ethers, sodium ethylene sulphonate, sodium styrene sulphonate, 2-acrylamido-2-methyl-propane-sulphonic acid, N-vinyl pyrrole, N-vinyl succinimide, N-vinyl pyrrolidone, 2- or 4-vinyl pyridine, acrylic acid, methacrylic acid, amino- (whereby the term "amino" also includes quaternary ammonium), mono- C₁-C₇-alkylamino- or di- C₁-C₇-alkylamino- C₁-C₇-alkyl-acrylates and - methacrylates, allyl alcohol and the like. Preference is given e.g. to hydroxy-substituted C₂-C₄-alkyl(meth)acrylates, five- to seven-membered N-vinyl-lactams, N,N-di-C₁-C₄-alkylmethacrylamides and vinylically unsaturated carboxylic acids with a total of 3 to 5 carbon atoms.

Preferred hydrophobic vinylic monomers are methyl methacrylate and vinyl acetate. Preferred hydrophilic vinylic comonomers are 2-hydroxyethyl methacrylate, N-vinyl pyrrolidone and acrylamide.

To facilitate the photocrosslinking and/or polymerizing process, it is desirable to add a photoinitiator, which can initiate radical crosslinking and/or polymerizing. Exemplary photoinitators suitable for the present invention include benzoin methyl ether, 1-hydroxycyclohexylphenyl ketone, Durocure^{®} 1173 and Irgacure^{®} photoinitators. Preferably, between 0.3 and 2.0%, based on the total weight of the polymerizable formulation, of a photoinitiator is used.

In accordance with a preferred embodiment, a spatial limitation of actinic radiation (or the spatial restriction of energy impingement) is effected by masking for a mold that is at least partially impermeable to the particular form of energy used. The energy used for the crosslinking is radiation energy, especially UV radiation, gamma radiation, electron radiation or thermal radiation, the radiation energy preferably being in the form of a substantially parallel beam in order on the one hand to achieve good restriction and on the other hand efficient use of the energy.

In accordance with another preferred embodiment, a spatial limitation of actinic radiation (or the spatial restriction of energy impingement) is effected by a mold that is highly permeable, at least at one side, to the energy form causing the crosslinking and that has mold parts being impermeable or of poor permeability to the energy.

As an illustrative example, a chromium mask can be applied to a quartz mold to block passage of light through portions of the mold where crosslinking is not desired, the transition between masked and unmasked portions of the mold defining an edge of the lens. A collimator or aperture in the sleeve or bushing housing the quartz mold collimates the UV light to more precisely define the lens shape.

In the case of UV light, the mask may preferably be a thin chrome layer, which can be produced according to processes as known, for example, in photo and UV lithography. Other metals or metal oxides may also be suitable mask materials. The mask can also be coated with a protective layer, for example of silicon dioxide if the material used for the mold or mold half is quartz. The mask does not necessarily have to be fixed but could, for example, be constructed or arranged to be removable or exchangeable. It could, in principle, be provided anywhere at or on the mold as long as it is able to fulfill the function for which it is intended, namely the screening of all areas of the mold carrying uncrosslinked material with the exception of the mold cavity. Preferably, the mask is arranged on, or just below, a wall surface that is in contact with the uncrosslinked starting material, since in that manner undesired diffraction and scattering effects can be substantially decreased. That is not, however, absolutely essential. In principle it is even possible to dispense with a mask or masking in or on the mold if the energy impingement can be restricted locally to the mold cavity by some other means, where necessary taking into consideration the optical effect of the mold. In the case of UV radiation this could be achieved, for example, by a spatially restricted light source, a suitable lens arrangement optionally in combination with external masks, screens or the like and taking into consideration the optical effect of the mold.

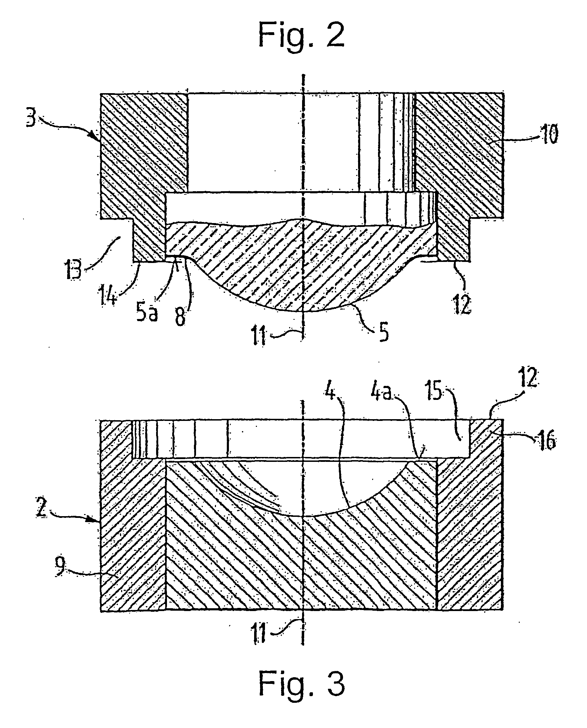

Fig. 1 schematically illustrates a mold **1** for the production of a contact lens from a fluid composition according to a preferred embodiment of the invention. The mold **1** comprises a female mold half **2** and a male mold half **3,** each of which has a curved molding surface **4** or **5** respectively. The two mold halves **2, 3** are configured to receive each other such that a cavity **6** is formed between the two molding surfaces **4, 5.** The mold cavity **6** in turn determines the shape of the contact lens to be produced. The male mold half **3,** illustrated specifically in Fig. 2, has a convex molding surface **5,** defining the posterior (concave) surface (base curve) of the contact lens to be produced, while the female mold half **2,** illustrated in Fig. 3, is provided with a concave molding surface **4,** which determines the anterior (convex) surface of the contact lens to be produced.

In the exemplary embodiment illustrated in Fig. 1, the mold cavity **6** is not sealed off completely and tightly, but is open circumferentially in the region of its circumferential edge, which defines the rim of the contact lens to be produced, and is connected there to a relatively narrow annular gap **7,** which can be designed to be continuous or else of segment shape. The annular gap **7** is bounded and formed by a mold wall **4a** and **5a** respectively on the female and male mold halves **2, 3.** However, within the context of the invention, it is also conceivable to design the individual mold halves **2, 3** in such a way that they touch each other adjacent to the mold cavity **6,** and the mold cavity **6** is thus tightly sealed by the bounding walls of the two individual mold halves **2, 3.**

The two mold halves **2** and **3** consist of a material that is as transparent as possible to the selected energy form, especially UV light, for example of a polypropylene that is usually used for such purposes or another polyolefin. Since the irradiation with UV light is carried out only on one side here, specifically expediently from above through the male mold half **3,** it is only the latter which advantageously needs to be transparent to UV. This is correspondingly true for irradiation through the female mold half **2.**

The application of the energy effecting the crosslinking to the lens-forming material from which the contact lens is produced is restricted to the mold cavity **6,** i.e. it is only the crosslinkable material in the mold cavity **6** that has the suitable form of energy, especially UV radiation, applied to it, and only the material in the cavity **6** is crosslinked. In particular, the material in the annular gap **7** surrounding the mold cavity **6** is not crosslinked. For this purpose, the mold face **5** of the male mold half **3** is advantageously provided in the region of its mold wall **5a** with a mask **8** that is non-transparent to UV light, this mask extending as far as directly alongside the mold cavity **6** and, with the exception of the latter, preferably shielding from the irradiated energy all the remaining parts, cavities or surfaces of the mold which are in contact or can come into contact with the uncrosslinked, possibly excess material, which is liquid here. Thus, subareas of the rim of the lens are formed by physically limiting the radiation or other forms of energy initiating the polymerization or crosslinking, rather than by limiting the material by means of mold walls.

In the case of UV light, the mask **8** may, in particular, be a thin chromium layer which is produced, for example, by a process such as is known, for example, in photolithography or UV lithography. The mask material considered can, if desired, also be other metals or metal oxides. The mask may also be covered with a protective layer, for example with silicon oxide. The mask is advantageously arranged in a fixed position since this simplifies the automation.

However, it is also possible to use a separately designed mask or screen, which likewise has the effect of limiting the UV radiation onto the mold cavity **6.** Furthermore, optical guidance of the beam path outside the mold may be provided, in order to achieve spatial limitati on of the UV radiation.

The shaping surfaces **4, 5** of the female mold half **2** and of the male mold half **3** are each embedded in a mount **9,10,** whose shape is advantageously selected such that simple handling, without additional adjustment work, is made possible. To this end, the mounts **9, 10** have guide surfaces which are aligned towards an optical axis **11** of the respective shaping surface **4, 5.** In addition, they also have elements which permit exact positioning of the two mold halves **2, 3** into the axial direction with respect to the optical axis. The elements per se, or in cooperation with other external elements, permit the required simple adjustment when the mold is closed.

It is thus possible for the two mold halves **2,3** to be centered in relation to each other by means of their mounts **9, 10** when they are being joined. The centering accuracy should preferably be better than 5 µm. The axial distance between the two mold halves **2, 3** defines the central thickness of the contact lenses, which is typically around 0.1 mm. This distance should expediently be maintained within the range of 0.005 mm. Tilting of the two mold halves **2, 3** in relation to each other is to be reduced to a minimum. Given a diameter of the shaping surfaces **4, 5** of about 14 mm, the tilt error in the axial direction should advantageously be less than 5 µm.

For this purpose, the mold halves **2, 3** illustrated in Figs. 2 and 3, have on their mount **9, 10** mold recesses, which can be inserted with a precise fit into corresponding, complementarily designed projections on the respectively corresponding mold half **2, 3,** and together form the guide surfaces of the two mold halves **2** and **3.** The centering and guidance of the two mold halves **2, 3** when the mold is being closed is provided by the outer contour, produced with the highest possible precision, of the mold recesses and projections, so that overall simple handling of the closing operation of the mold results from the interengagement of male and female mold halves.

The male mold half **3** illustrated specifically in Fig. 2 has on its outer mount **10,** in the region of a dividing surface **12,** a recess **13** which is of annular design and exposes a web **14** which encloses the shaping surface **5.** When the two mold halves **2, 3** are closed, this web **14** engages in an annular groove **15,** which is produced so as to be an accurate fit and annularly encloses the shaping surface **4** of the female mold half **2.** The highly precise production of web **14** and groove **15** with respect to their front and outer surfaces, which serve as guide surfaces, permits the adjustment-free centring of the two mold halves **2, 3** in relation to the optical axis **11,** and the defining of the axial distance between the two mold halves **2, 3.** In order to define the axial distance between the two mold halves **2, 3,** it is also possible to use a separate spacer ring, which is preferably inserted into the groove **15.** The dimensions of the guide surfaces of web **14** and groove **15** should not be selected to be too large, in order to avoid tilting of the two mold halves **2, 3** when they are being joined. In order to facilitate the insertion of the web **14** into the groove **15,** it is, moreover, also possible to provide the groove **15** with an insertion bevel. In order to permit the two mold halves **2, 3** to be closed without force, no attempt is made to provide accurately fitting seating of the recess **13** with a corresponding mold attachment **16,** which adjoins the groove **15** of the female mold half **2.** When the mold is closed, there therefore remains a gap **17** between the end surfaces of the mold recess **13** and of the mold attachment **16.** In addition to closing the two mold halves as a result of their dead weight, it is also conceivable for the two mold halves to be joined to each other by means of a spring, which permits the largely force-free closure of the two mold halves, so that the guide surfaces are not pressure-loaded during the closing operation.

Furthermore, it is expedient to design the mold recesses in such a way that rotation of the two mold halves **2,3** in relation to each other is possible, since by this means the adhesive forces which are caused by the adhesion of the contact lens to one of the two mold halves **2, 3** and which lie in the range from 60 N to 120 N can be overcome, and thus the forces during the opening of the molds can be reduced. Overall, the damage to lenses during the separation of the mold halves **2, 3** in order to remove the contact lens can be reduced considerably by this means.

In particular, it is advantageous for at least the half of the mold that is irradiated with UV light to consist of quartz. This material is distinguished not only by an especially good UV transparency, but is in addition also very hard and resistant, so that molds produced from this material can be reused very well. However, the precondition for this, as emerges still further from the following text, is that the mold is closed either without force or incompletely, so that the mold halves are not damaged by contact. As an alternative to quartz, it is also possible for UV-transparent special glasses or sapphire to be used. It is further possible for UV-transparent plastics to be used. Preferred plastic material can be any optically clear material that is durable against wear, temperature and electromagnetic energy, has good surface finish qualities, and has good IR and UV transmittance. A particularly preferred example is **Topas^{®}** COC grade 8007-S10 (clear amorphous copolymer of ethylene and norbornene) from Ticona GmbH of Frankfurt, Germany and Summit, New Jersey.

Because of the reusability of the mold halves, a relatively high outlay can be expended at the time of their production in order to obtain molds of extremely high precision an d reproducibility. Since the mold halves do not touch each other in the region of the lens to be produced, i.e. the cavity or actual mold faces, damage as a result of contact is ruled out. This ensures a high service life of the molds, which, in particular, also ensures high reproducibility of the contact lenses to be produced.

In the event of applying energy on one side, it is in principle possible for the m old half facing away from the energy source to be produced from any material which withstands the crosslinkable material or components thereof. If metals are used, however, potential reflections are to be expected, depending on the type of energetic radiation, and these may possibly lead to undesired effects such as over exposure, edge distortion or th e like. Absorbent materials do not have these disadvantages.

It is possible to use other alternatives to replace quartz molds with chromium marks. Examples of such alternative molds are molds described in US Patent Application Publ. No. 2004-0140578 A1 and in WO 2004/054772.

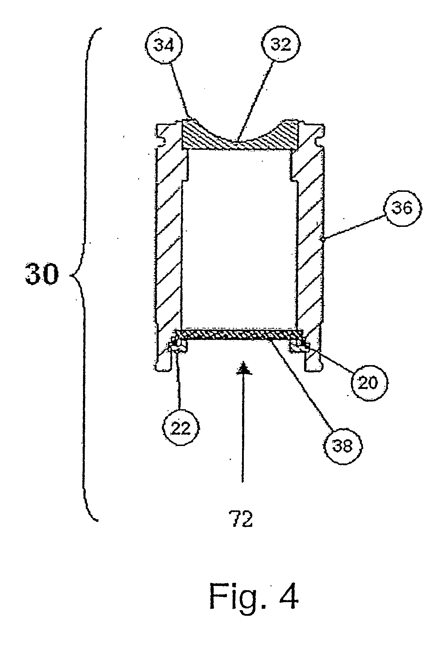

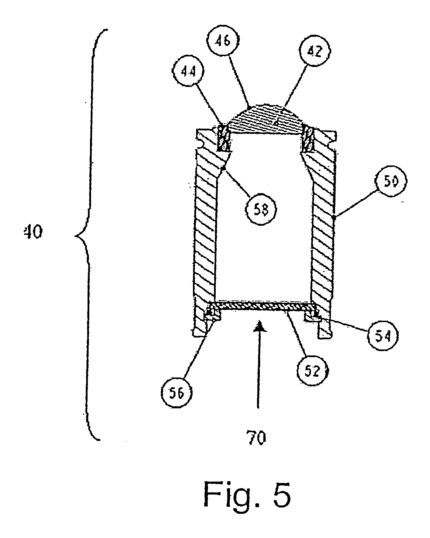

Figures 4 and 5 schematically show the female and male mold halves of a mold according to a preferred embodiment of the invention.

Referring to Fig. 4, the female mold half **30** preferably comprises a molding surface component **34** which includes a molding surface **32** defining the anterior surface (convex surface) of a contact lens to be produced. The molding surface component **34** is preferably in a generally disc-shaped button or panel and is prepared from preferably a generally transparent or translucent material, most preferably a polymeric material, by, for example, lathing, machining or other fabrication method. In one example, the molding surface component is prepared from a cyclic-olefin copolymer (COC), such as the generally clear amorphous copolymer of ethylene and norbornene sold under the tradename Topas^{®}, by Ticona GmbH of Frankfurt, Germany and Summit, New Jersey. The molding surface component **34** is optionally mounted in one end of a housing or sleeve **36,** formed of a substantially rigid material such as for example brass. A glass plate **38** is preferably mounted in the other end of the sleeve **36,** and secured in place by an O-ring **20** and an aluminum retainer ring **22.** The housing or sleeve **36** optionally comprises mounting features for installation within a mold housing or other external carrier.

The molding surface element **34** is preferably manufactured as a unitary piece from Topas^{®} COC or other suitable polymer(s) or other material(s), impregnated with a UV-absorptive material. The inclusion of a UV-absorptive material has been found to be advantageous, as it prevents or reduces reflection or transmission within the mold cavity of UV light used to cure the polymer of the molding, which could result in curing of the polymer in unintended regions of the mold cavity, potentially rendering a molding defective. Suitable results may be obtained, for example, using a Topas^{®} COC grade 8007-S10 material with a blue filler for UV blocking. A suitable UV-absorptive filler material is TSP Blue No. OM51620034, obtained from Clariant Masterbatches of Muttenz, Switzerland, which is preferably mixed in about a 1:33 ratio with the clear Topas^{®} COC. The UV-absorptive material preferably allows infrared (IR) transmittance through the mold component, to facilitate IR illumination for inspection of the moldings through the mold.

The molding surface element **34** of the female mold half **30** is preferably machined from a rod or extruded piece of Topas^{®} COC impregnated with the UV-absorptive filler. The back optics of the mold surface are preferably finished on a diamond turning center to optical tolerances. The partially finished mold is preferably press-fit into the brass sleeve **36.** Referencing a surface on the upper surface of the brass sleeve **36,** the front surface optics are preferably finished on a diamond turning center. After the optics are finished, the quartz window **38** is preferably installed on the bottom of the brass sleeve **36,** along with the O-ring **20** and the window retainer **22.**

Referring to Fig. 5. the male mold half **40** preferably comprises a transmissive portion **42,** which allows passage of UV light or other energy used to cure the polymer used to form the molding. The transmissive portion **42** is preferably fabricated from an optically clear material that is durable against wear, temperature and electromagnetic energy, has good surface finish qualities, and has good IR and UV transmittance, such as for example Topas^{®} COC grade 8007-S10. The male mold half **40** preferably further comprises a masking portion **44** that blocks UV or other energy used to cure the polymer forming the molding. An example embodiment of the masking portion **44** comprises 8007-S10 Topas^{®} COC mixed with a UV-blocker, such as a carbon black filler, in about a 50:1 ratio. The masking portion **44** prevents transmission of curing energy to the underlying polymer within the mold cavity, to prevent curing in the masked portions of the mold, and thereby more precisely define the edge of the molding formed beneath the interface of the masked and transmissive (unmasked) portions.

In the example embodiment depicted in Fig. 5, the masking portion comprises a collar **44** having an inner diameter adapted to fit in close engagement with the generally circular disc-shaped transmissive portion **42.** The masking collar **44** preferably has a thickness t of at least about 1000 times the wavelength of the energy used to cure the moldings. For example, for UV curing energy having a wavelength of about 300 nanometers, the collar preferably has a thickness of at least about 0.3 mm. More preferably, the masking collar **44** has a thickness of at least about 2-3 mm. A collar having a thickness that is large relative to the wavelength of the curing energy advantageously serves to align or collimate the light passing through the transmissive portion **42** without the need for a separate lens or collimator, reducing the potential spread of curing energy into masked portions of the mold cavity, and providing more precise control of the molding edge. The combined transmissive portion **42** and masking collar **44** provide a molding surface **46** defining the posterior surface (concave surface) of a contact lens to be produced. The male mold half **40** optionally further comprises a mounting sleeve or bushing **50,** having a mounting bore formed in one end for securely engaging the outer diameter of the masking collar **44.** A glass plate **52** is preferably retained in the bushing **50** by an O-ring **54** and a retaining ring **56,** as shown. The male mold sleeves **50** preferably have a tapered interior portion **58** that assists the curing process.

The transmissive portion **42** is preferably fabricated from clear Topas^{®} COC rod or extrusion stock, and machined into a rough blank. A similar machining process is app lied to fabricate the masking collar **44** from a Topas^{®} COC molding or extrusion impregnated with a UV-blocker. The masking collar blanks generally resemble a washer or a doughnut, with a center hole for receiving the clear transmissive portion. The back surface of the transmissive portion **42** is cut or machined, for example using a diamond lathe or turning center, to optical tolerances. The transmissive portion is pressed into the center opening of the masking collar. The mask **44** and optics **42** are pressed into the brass sleeve **50.** The outer mask **44** preferably rests on the sleeve 50 and holds the optics in place. The back optical surface preferably does not touch the sleeve **50.** Once the sleeve **50,** mask **44** and optics **42** have been assembled, the front surface optics are finished on the diamond turning center. A surface on the sleeve **50** is preferably used for setup in production as the tooling reference for the front surface optics. The mask and optics preferably are machined smooth, appearing as a single continuous piece when the final optics are cut on the front surface. The finished surface consists of the mask and optics and is optical quality. After the optics are finished, the quartz window **52** is installed on the bottom of the brass sleeve **50,** along with the o-ring **54** and the window retainer **56.**

In the depicted embodiment (Figs. 4-5), the male mold component comprises the UV transmissive portion and the UV-blocking masking portion of the molding system, and the female mold component comprises the UV-absorptive portion. The reverse configuration is also within the scope of the present invention, wherein the male mold component comprises a UV-absorptive material and the female mold component comprises a UV-transmissive portion and a UV-blocking masking portion. Likewise, mold profile geometries other than those depicted are within the scope of the invention.

In use, the mold components and mold system of the present invention enable an improved method of forming a polymeric molding such as a contact lens or other polymeric item. A first mold half **40** and a second mold half **30** are engaged to define a mold cavity between their respective molding surfaces **46, 32.** A fluid composition is deposited into the mold cavity prior to closing the mold or through a fill channel. The fluid composition is cured from the liquid state through the transmissive portion **42** using UV light or oth er curing energy, indicated by direction arrow **70** in the example embodiment of Fig. 5. The masking portion **44** blocks the curing energy from causing the fluid composition in masked portions of the mold cavity to cure, thereby more precisely defining the edge(s) of the final molding. The UV-absorptive material prevents or reduces unwanted reflection in the mold chamber, and the molding irregularities potentially caused thereby. After curing, the molding is optionally inspected in the mold cavity to identify any defects. For example, the molding is illuminated by IR light, indicated by direction arrow **72,** through the mold half **30** and inspected using a charge-coupled device (CCD) camera and software-implemented inspection algorithms. The molds are opened and the moldings de-molded for further inspection, processing and/or packaging.

The previous disclosure will enable one having ordinary skill in the art to practice the invention. In order to better enable the reader to understand specific embodiments and the advantages thereof, reference to the following examples is suggested.

### Example 1

Determination of the induction period, prior to the on-set of crosslinking processes caused by the presence of a radical scavenger, such as 4-hydroxy-2,2,6,6-tetramethylpiperpiperindinyloxy, free radical and determination of the incident energy required to actinically fully crosslink a reactive and fluid macromolecular species upon consumption of the free radical scavenger, to form a contact lens are performed by photo-rheological and spectroscopic methodologies.

Photorheology measurements are conducted on a modified StressTech Rheometer, manufactured by ReoLogica Instruments, to measure shear modulus. Shear modulus is recorded through using a parallel plate arrangement, wherein the upper plate and the base plate are quartz plates, through which UV irradiation from a light source can pass and be absorbed by a photoinitiator to form reactive species that will initiate free radical crosslinking polymerization. The light source is a UV-IQ400 manufactured by Dr. Groebel UV Electronic GmbH, fitted with a Phillips HPA-400/30S bulb. Light from the source is directed down a light guide and through a WG305 cut-off filter manufactured by Schott Glass, before being impinged on the quartz plate. The intensity of light that passes through this optical arrangement is measured with a RM-12 radiometer manufactured by Dr. Groebel Electronic GmbH and calibrated to the manufacture's standard. Intensity values are given in mWcm⁻² and all cure energies quoted are the sum Intensity (mWcm⁻²) x time (seconds) and are given in milli Joules (mJ). The oscillation frequency of the photorheometer was set at 10Hz and viscosity changes measured in a time resolved manner. Measurements are typically terminated 30 seconds after the cessation of increase in viscosity. The delay in the on-set of an increase in viscosity is a measure of the induction period.

Time resolved UV Spectroscopic measurements to monitor changes in the optical density of the fluid macromonomer solution at 250 nm are recorded on a Cary 50 UV-vis spectrophotometer. The UV source is a Hamamatsu UV lamp manufactured by Hamamatsu K.K.. Light from the source is passed down a light guide and through a WG305 cut-off filter manufactured by Schott Glass, before being impinged on the sample contained between two quartz microscope slides. The intensity of light that passes through this optical arrangement is measured with a RM-12 radiometer manufactured by Dr. Groebel Electronic GmbH and calibrated to the manufacture's standard. Measurements are typically terminated 30 seconds after the cessation of a decrease in the absorption at 250 nm and full cure given as the time required for cessation in absorption change. Th e delay in the on-set of a decrease in absorption at 250 nm, upon illumination of actin ic radiation is a measure of the induction period.

### Example 2

Fluid compositions (formulations) comprising Nelfilcon A (a water-soluble, crosslinkable polyvinylalcohol from CIBA Vision), water, photoinitiator (Irgacure 2959; Ciba Specialty Chemicals), 4-hydroxy-2,2,6,6-tetramethylpiperpiperindinyloxy, free radical (HO-TEMPO; Aldrich Chemicals) and Synperonic PE/F38 (Uniqemia) are prepared in quantities detailed in Table 1 below.

**Table 1**

| Formulation No. | Nelfilcon A (Wt%) | Water (Wt%) | Irgacure 2959 (Wt%) | HO-TEMPO (Wt%) | Synperonic PE/F38 (Wt%) |
|---|---|---|---|---|---|
| 1 | 30 | 69.46 | 0.03 | 0.00125 | 0.5 |
| 2 | 30 | 69.47 | 0.03 | - | 0.5 |

Lenses are prepared as follows. 45-65 mg of a fluid com position (formulation 1 or 2) is introduced into the cavity of a female mold half as illustrated in Figure 2 and a male mold (Figure 3) placed on top to form the mold configuration a shown in Figure 1. UV light is impinged on the mold arrangement shown in Figure 1. The light source is a UV-IQ400 manufactured by Dr. Groebel UV Electronic GmbH, fitted with a Phillip HPA-400/30S bulb. Light from the source is directed down a light guide and through a WG305 cut-off filter manufactured by Schott Glass. The intensity of light that passes through this optical arrangement is measured with a RM-12 radiometer manufactured by Dr. Groebel Electronic GmbH and calibrated to the manufactures' standard. The irradiation dose is controlled by using a fixed intensity of light and modulating the exposure time through the use of an automated shutter arrangement. Energy values are quoted in mJ.

The mold is opened and the contact lens removed, washed and autoclaved in 0.65 ml of Saline 80 (Novartis) in an air over steam autoclave at 121 °C for 45 minutes.

The lens edge quality is visually inspected for edge overcure (flash) over the total circumference of the lens by an Optispec at a magnification of x 18. Edge overcure is evaluated on a presence-absence basis and is detailed in Table 2.

**Table 2**

| Formulation No. | Induction Period (seconds) | Cure Energy (mJ) | Edge Overcure x18 magnification |
|---|---|---|---|
| 1 | 2.0 | 20 | absent |
| 2 | 0.5 | 17 | present |

Effects of dosages of UV radiation on th e edge quality of a contact lens is also studied using the formulation listed in Table 1. Results are shown in Table 3.

**Table 3.**

| Formulation No. | Induction Period (seconds) | Cure Energy (mJ) | Edge Overcure x18 magnification |
|---|---|---|---|
| 1 | 2.0 | 27 | absent |
| 1 | 2.0 | 36 | absent |
| 2 | 0.5 | 27 | present |
| 2 | 0.5 | 36 | present |

Although various embodiments of the invention have been described using specific terms, devices, and methods, such description is for illustrative purposes only. The words used are words of description rather than of limitation. It is to be understood that changes and variations may be made by those skilled in the art without departing from the spirit or scope of the present invention, which is set forth in the following claims. In addition, it should be understood that aspects of the various embodiments may be interchanged either in whole or in part. Therefore, the scope of the appended claims should not be limited to the description of the preferred versions contained therein.

## Claims

1. A method for producing a contact lens, comprising the steps of:
(1) obtaining a fluid composition comprising a lens-forming material and a radical scavenger, wherein the lens-forming material is crosslinkable and/or polymerizable by actinic radiation, wherein the radical scavenger is present in the fluid composition in an amount sufficient to provide an induction time which is equal to or larger than that caused by oxygen present in the fluid composition and which is from 5% to 50% of initial cure time;
(2) introducing the fluid composition into a cavity formed by a mold (1), wherein the mold has a first mold half with a first molding surface and a second mold half with a second molding surface, wherein said first and second mold halves are configured to receive each other such that the cavity is formed between said first and second molding surface (4, 5); and
(3) crosslinking and/or polymerizing the lens-forming material under a spatial limitation of actinic radiation to form the contact lens having a first surface, an opposite second surface and an edge, wherein the first surface is defined by the first molding surface, the second surface is defined by the second molding surface, and the edge is defined by the spatial limitation of actinic irradiation, and wherein the radical scavenger present in the fluid composition reduces substantially the crosslinking and/or polymerizing of the lens-forming material outside of and around the spatial limitation of actinic radiation so that the quality of the edge is improved.

2. The method of claim 1, wherein the induction time is from 5% to 25% of initial cure time.

3. The method of claim 1, wherein the induction time is from 6% to 15% of initial cure time.

4. The method of claim 1, wherein the radical scavenger is a N-oxyl or nitroxide compound, a quinone methide, a nitroso compound, a phenothiazine, a phenol, Vitamin C, Vitamin E, citric acid, or a combination thereof.

5. The method of claim 4, wherein the radical scavenger comprises a N-oxyl or nitroxide compound.

6. The method of claim 4, wherein the radical scavenger comprises 4-hydroxy-2,2,6,6,-tetramethyl-1-piperidinyloxy, free radical.

7. The method of claim 4, wherein wherein the radical scavenger comprises Vitamin C, Vitamin E, citric acid, or a combination thereof.

8. The method of claim 1, wherein the lens-forming material comprises at least one prepolymer.

9. The method of claim 8, wherein the prepolymer is a silicone-containing prepolymer or a silicone-free prepolymer.

10. The method of claim 9, wherein the prepolymer is a water-soluble silicone-free prepolymer.

11. The method of claim 10, wherein the prepolymer is a water-soluble crosslinkable poly(vinyl alcohol) prepolymer, a water-soluble vinyl group-terminated polyurethane, a water-soluble crosslinkable polyurea prepolymer, a crosslinkable polyacrylamide, a crosslinkable statistical copolymer of vinyl lactam, MMA and a comonomer, a crosslinkable copolymer of vinyl lactam, vinyl acetate and vinyl alcohol, a polyether-polyester copolymer with crosslinkable side chains, a branched polyalkylene glycol-urethane prepolymer, a polyalkylene glycol-tetra(meth)acrylate prepolymer, or a crosslinkable polyallylamine gluconolactone prepolymer.

## Patentansprüche

1. Verfahren zur Herstellung von Kontaktlinsen, umfassend die Schritte:
(1) Erhalten einer Flüssigzusammensetzung enthaltend ein linsenbildenes Material und einen Radikalfänger, wobei das linsenbildende Material durch aktinische Strahlung vernetzbar und/oder polymerisierbar ist, wobei der Radikalfänger in der Flüssigzusammensetzung in einer Menge vorhanden ist, die ausreichend ist eine Induktionszeit zu erzeugen die gleich groß oder größer ist als eine durch in der Flüssigzusammensetzung vorhandenen Sauerstoff verursachte Induktionszeit, und die 5 bis 50% der initialen Härtungszeit beträgt;
(2) Einbringen der Flüssigzusammensetzung in einen von einer Form (1) gebildeten Hohlraum, wobei die Form eine erste Formhälfte mit einer ersten Formoberfläche und eine zweite Formhälfte mit einer zweiten Formoberfläche aufweist, wobei die erste und zweite Formhälfte so ausgebildet sind, dass sie einander so aufnehmen können, dass der Hohlraum zwischen der ersten und zweiten Formoberfläche (4,5) gebildet wird; und
(3) Vernetzen und/oder Polymerisieren des linsenbildenenden Materials unter räumlicher Begrenzung der aktinischen Strahlung um so die Kontaktlinse zu formen die eine erste Oberfläche, eine gegenüberliegende zweite Oberfläche und einen Rand hat, wobei die erste Oberfläche durch die erste Formoberfläche definiert ist, die zweite Oberfläche durch die zweite Formoberfläche definiert ist und der Rand durch die räumliche Begrenzung der aktinischen Bestrahlung definiert ist, und wobei der Radikalfänger in der Flüssigzusammensetzung die Vernetzung und/oder Polymerisation ausserhalb und um die räumliche Begrenzung der aktinischen Strahlung herum erheblich reduziert, so dass die Qualität des Randes verbessert wird.

2. Verfahren gemäss Anspruch 1, wobei die Induktionszeit 5% bis 25% der initialen Härtungszeit beträgt.

3. Verfahren gemäss Anspruch 1, wobei die Induktionszeit 6% bis 15% der initialen Härtungszeit beträgt.

4. Verfahren gemäss Anspruch 1, wobei der Radikalfänger eine N-oxyl- oder Nitroxid-Verbindung, ein Chinonmethid, eine Nitroso-Verbindung, ein Phenothiazin, ein Phenol, Vitamin C, Vitamin E, Zitronensäure, oder eine Kombination aus diesen ist.

5. Verfahren gemäss Anspruch 4, wobei der Radikalfänger eine N-oxyl- oder Nitroxid-Verbindung ist.

6. Verfahren gemäss Anspruch 4, wobei der Radikalfänger ein 4-hydroxy-2,2,6,6,-tetramethyl-1-piperidinyloxy freies Radikal umfasst.

7. Verfahren gemäss Anspruch 4, wobei der Radikalfänger Vitamin C, Vitamin E, Zitronensäure, oder eine Kombination aus diesen umfasst.

8. Verfahren gemäss Anspruch 1, wobei das linsenbildendes Material mindestens ein Prepolymer umfasst.

9. Verfahren gemäss Anspruch 8, wobei das Prepolymer ein silikonenthaltendes Prepolymer oder ein silikonfreies Prepolymer ist.

10. Verfahren gemäss Anspruch 9, wobei das Prepolymer ein wasserlösliches silikonfreies Prepolymer ist.

11. Verfahren gemäss Anspruch 10, wobei das Prepolymer ein wasserlösliches vernetzbares Poly(vinyl alkohol)-Prepolymer, ein wasserlösliches Vinylgruppenterminiertes Polyurethan, ein wasserlösliches vernetzbare Polyharnstoff-Prepolymer, ein vernetzbares Polyacrylamid, ein vernetzbares statistisches Copolymer des Vinyl laktam, MMA und eines Co-monomers, ein vernetzbares Copolymer des Vinyl laktam, Vinyl acetat und Vinyl alkohol, ein Polyether-Polyester Copolymer mit vernetzbaren Seitenketten, ein verzweigtes Polyalkylenglykol-Urethan-Prepolymer, ein Polyalkylen glykol-tetra(meth)acrylat-Prepolymer, oder ein vernetzbares Polyallylaminglukonolakton-Prepolymer ist.

## Revendications

1. Procédé de production d'une lentille de contact, comprenant les étapes consistant à :
(1) obtenir une composition de fluide comprenant un matériau permettant de fabriquer une lentille et un piégeur de radicaux, le matériau permettant de fabriquer une lentille étant réticulable et/ou polymérisable par rayonnement actinique, le piégeur de radicaux étant présent dans la composition de fluide en une quantité suffisante pour obtenir un temps d'induction qui est supérieur ou égal à celui occasionné par l'oxygène présent dans la composition de fluide et qui correspond à 5 à 50 % du temps de durcissement initial ;
(2) introduire la composition de fluide dans une cavité formée par un moule (1), le moule ayant une première moitié de moule avec une première surface de moulage et une seconde moitié de moule avec une seconde surface de moulage, lesdites première et seconde moitiés de moule étant configurées pour s'adapter l'une à l'autre de façon à ce qu'une cavité soit formée entre lesdites première et seconde surfaces de moulage (4,5) ; et
(3) réticuler et/ou polymériser le matériau permettant de fabriquer une lentille sous une limitation spatiale de rayonnement actinique pour former la lentille de contact ayant une première surface, une seconde surface opposée et un bord, la première surface étant définie par la première surface de moulage, la seconde surface étant définie par la seconde surface de moulage, et le bord étant défini par la limitation spatiale du rayonnement actinique, et le piégeur de radicaux présent dans la composition de fluide réduisant sensiblement la réticulation et/ou la polymérisation du matériau permettant de fabriquer une lentille à l'extérieur de et autour de la limitation spatiale de rayonnement actinique, de sorte que la qualité du bord est améliorée.

2. Procédé selon la revendication 1, dans lequel le temps d'induction correspond à 5 à 25 % du temps de durcissement initial.

3. Procédé selon la revendication 1, dans lequel le temps d'induction correspond à 6 à 15 % du temps de durcissement initial.

4. Procédé selon la revendication 1, dans lequel le piégeur de radicaux est un composé N-oxyle ou nitroxyde, une quinone-méthide, un composé nitroso, une phénothiazine, un phénol, la vitamine C, la vitamine E, l'acide citrique, ou une combinaison de ceux-ci.

5. Procédé selon la revendication 4, dans lequel le piégeur de radicaux comprend un composé N-oxyle ou nitroxyde.

6. Procédé selon la revendication 4, dans lequel le piégeur de radicaux comprend le radical libre 4-hydroxy-2,2,6,6-tétraméthyl-1-pipéridinyloxy.

7. Procédé selon la revendication 4, dans lequel le piégeur de radicaux comprend la vitamine C, la vitamine E, l'acide citrique, ou une combinaison de ceux-ci.

8. Procédé selon la revendication 1, dans lequel le matériau permettant de fabriquer une lentille comprend au moins un prépolymère.

9. Procédé selon la revendication 8, dans lequel le prépolymère est un prépolymère contenant une silicone ou un prépolymère exempt de silicone.

10. Procédé selon la revendication 9, dans lequel le prépolymère est un prépolymère exempt de silicone soluble dans l'eau.

11. Procédé selon la revendication 10, dans lequel le prépolymère est un prépolymère d'alcool polyvinylique réticulable soluble dans l'eau, un polyuréthane à groupe terminal vinyle soluble dans l'eau, un prépolymère de polyurée réticulable soluble dans l'eau, un polyacrylamide réticulable, un copolymère statistique réticulable de lactame vinylique, de MMA et d'un comonomère, un copolymère réticulable de lactame vinylique, d'acétate de vinyle et d'alcool vinylique, un copolymère polyéther-polyester avec des chaînes latérales réticulables, un prépolymère de polyalkylène glycol-uréthane ramifié, un prépolymère de polyalkylène glycol-tétra(méth)acrylate, ou un prépolymère de polyallylamine gluconolactone réticulable.
